# FASCICULE DE BREVET EUROPEEN

(11) **EP 1 089 415 B1**
(45) Date de publication et mention de la délivrance du brevet: **17.10.2007**
(21) Numéro de dépôt: 00120976.6
(22) Date de dépôt: 27.09.2000
(51) Int. Cl.: H02K 11/04, H02K 11/00, H02K 5/22, F04D 25/08, B60H 1/00

(54) **Installation de chauffage et/ou climatisation comprenant un groupe moto-ventilateur**
Heizungs- und/oder Klimaanlage mit einem Motorlüfter
Heating and/or air-conditionning installation having a motor ventilator unit

(30) Priorité: 29.09.1999 FR 9912127
(43) Date de publication de la demande: 04.04.2001
(73) Titulaire: VALEO SYSTEMES THERMIQUES, 78320 Le Mesnil Saint-Denis (FR)
(72) Inventeur: Guillemin, Jean, 61340 Saint Aignan S/Erre (FR); Terranova, Gilbert, 28000 Chartres (FR); Aloup, Christophe, 75015 Paris (FR)

(56) Documents cités:
- DE-A- 4 302 449
- DE-A- 19 824 342
- FR-A- 2 676 610
- FR-A- 2 742 813

## Description

La présente invention a pour objet une installation de chauffage et/ou de climatisation comprenant un groupe moto-ventilateur comportant un moteur, un module de variation de vitesse du moteur, une turbine entraînée par le moteur, et une volute à l'intérieur de laquelle est logée le moteur et définissant un canal de sortie d'un flux d'air à la périphérie de la turbine.

Dans une telle installation, le module de variation de la vitesse du moteur doit répondre à un certain nombre de contraintes, notamment en ce qui concerne l'évacuation des calories générées par le module, ainsi que relativement aux perturbations électromagnétiques. Par exemple, la mise en oeuvre d'un module du type à modulation de largeur d'impulsion met en oeuvre des commutations d'impulsion de puissance qui génèrent des rayonnements électromagnétiques, qui sont en particulier véhiculés par des fils de liaison, en aval vers le moteur, et en amont vers l'électronique de commande du module et les fils d'alimentation. Les normes d'interférence électromagnétique EMI limitent le rayonnement autorisé, ce qui fait que les modules, et notamment les modules à modulation par largeur d'impulsion PWM comprennent des filtres, de même que le moteur.

Il est certes possible, comme l'enseigne d'ailleurs le Brevet des Etats-Unis US 5 070 267, de loger entièrement le module de commande à l'intérieur du moteur, mais ceci impose de concevoir spécifiquement le moteur, et il ne peut donc être question dans un tel cas d'utiliser des moteurs standard déjà existants. En outre, la mise en oeuvre d'une telle intégration pose des problèmes de coûts non négligeables.

Il a par ailleurs été proposé de loger le module à l'extérieur du moteur, mais ceci s'accompagne de l'existence de fils de liaison entre le module et le moteur qui ne facilitent pas la solution du problème des interférences électromagnétiques EMI.

Ces interférences EMI sont générées par rayonnement au niveau des fils de liaison qui constituent des antennes et/ou du câblage d'alimentation du module, ce qui peut perturber les appareils électroniques (autoradio, etc...)

Les documents FR-A-2 742 813 et DE-A-198 24 342, décrivent chacun une installation du type mentionné ci-dessus.

La présente invention a pour objet une installation de chauffage et/ou de climatisation qui permette de résoudre au moins en partie les problèmes précités.

Dans ce but, l'invention concerne une installation de chauffage et/ou de climatisation comprenant un groupe moto-ventilateur comportant un moteur, un module de variation de vitesse du moteur, une turbine entraînée par le moteur, et une volute à l'intérieur de laquelle est logée le moteur et définissant un canal de sortie d'un flux d'air à la périphérie de la turbine, caractérisée en ce que le module de variation de vitesse est monté à la périphérie du moteur et présente un connecteur électrique enfiché dans un connecteur complémentaire du moteur, ainsi qu'au moins une paroi en matériau thermiquement conducteur, qui est en communication avec le canal de sortie de la volute afin de refroidir le module.

Ce montage permet, grâce à une connexion directe entre le module et le moteur, d'éviter les interférences électromagnétiques générées par des fils de liaison entre le module et le moteur, et en outre, la position de montage permet de mettre facilement en contact au moins une paroi de refroidissement avec de l'air provenant de la turbine ou pulseur.

En particulier, au moins une dite paroi peut être disposée dans une ouverture débouchant dans le canal de sortie de la volute. Le refroidissement peut être amélioré en disposant plusieurs de ces dites parois de manière à former des ailettes de refroidissement.

Il est avantageux q'au moins une dite paroi longe une paroi de ladite ouverture ménagée dans la volute et débouchant dans le canal de sortie, ceci permettant en particulier de faciliter le montage en ménageant une surface de référence qui forme une butée lorsque le connecteur est en fin de course de connexion.

De manière préférentielle, ladite ouverture fait partie d'un canal de refroidissement du moteur, qui prélève de l'air dans le flux d'air du canal de sortie de la volute.

Le module peut présenter une face qui vient en appui sur une face de la volute qui forme un côté du canal de sortie.

Le module peut être avantageusement en forme de secteur circulaire, de manière à épouser le contour externe de la volute.

Les composants du module sont avantageusement disposés dans un boîtier présentant au moins une partie métallique ou en plastique chargé.

Il est avantageux que le boîtier présente au moins deux compartiments séparés par au moins une cloison permettant une séparation thermique et/ou une isolation vis-à-vis des perturbations électromagnétiques. En particulier, un compartiment peut comporter au moins une self d'entrée du module.

Selon un mode de réalisation avantageux, un canal de circulation d'air est ménagé à l'intérieur du module, avec une entrée qui communique avec une première région du canal de sortie de la volute, et une sortie qui communique avec une deuxième région du canal de sortie de la volute, située en amont de la première région par rapport au sens de circulation du flux d'air dans le canal de sortie.

Selon un mode de réalisation avantageux, un canal de circulation d'air longe la face inférieure du module et communique avec ledit canal de sortie par une pluralité d'ouvertures, afin de prélever dans le canal de sortie un flux d'air qui vient longer ladite face inférieure pour refroidir le module.

Les caractéristiques et avantages de l'invention apparaîtront mieux à la lecture de la description qui va suivre, donnée à titre d'exemples non limitatifs, en liaison avec les dessins annexés, dans lesquels :
- la figure 1 représente un module monté sur une volute, pour laquelle n'est représentée que la demi-volute dite inférieure ;
- les figures 2a, 2b et 2c représentent un élément de boîtier du module portant les ailettes et qui vient en contact avec la volute.
- la figure 2d est un schéma représentant le circuit imprimé monté dans le module ;

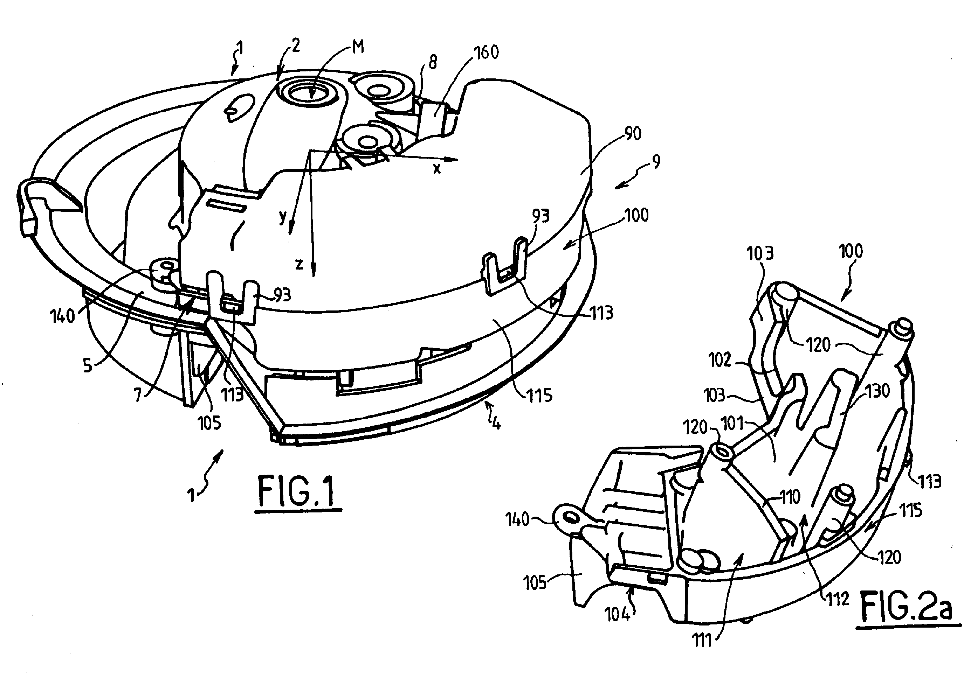

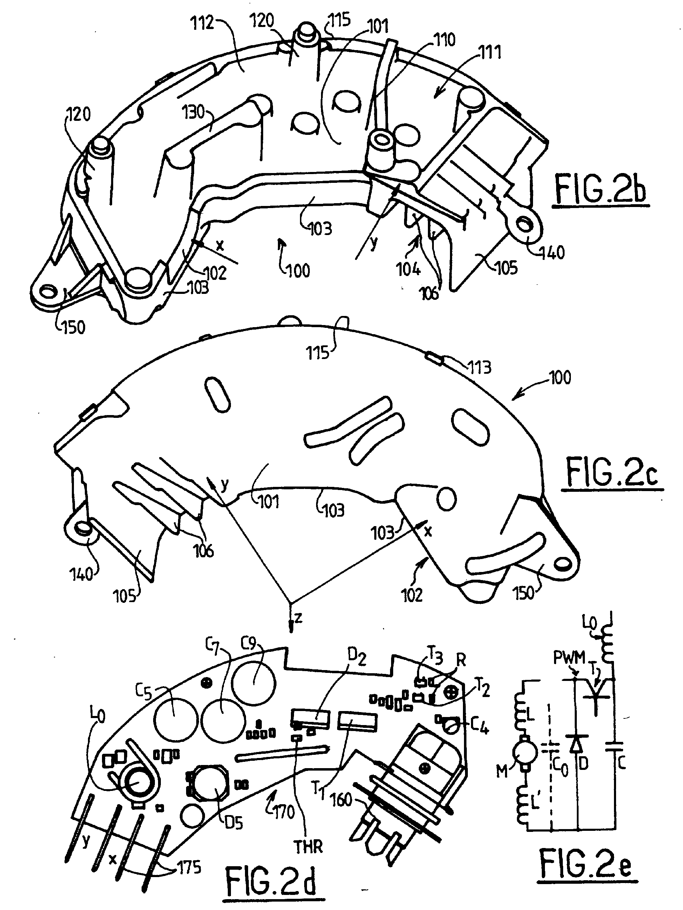

- la figure 2^{e} est un schéma simplifié illustrant le filtrage de protection du module et du moteur ;

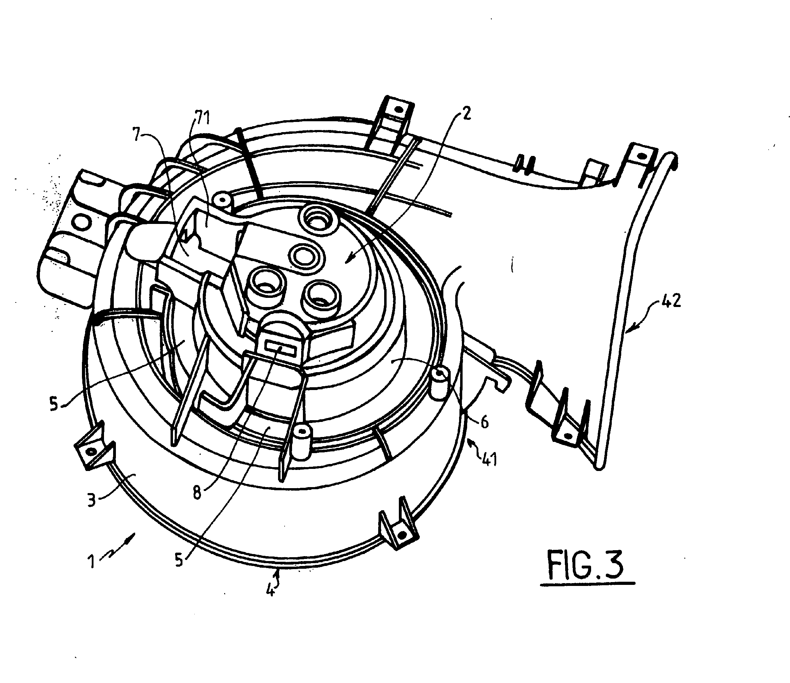

- la figure 3 représente un élément de volute, à savoir une demi-volute inférieure, sur laquelle le module est destiné à être monté.

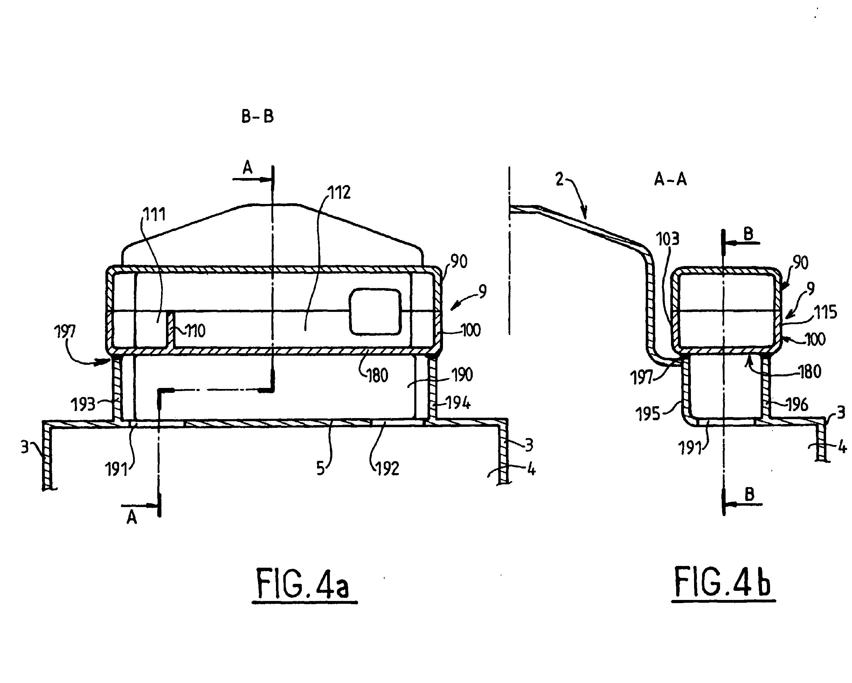

- et les figures 4a et 4b représentent la coupe BB et AA d'une variante de réalisation de l'invention.

Si on se reporte plus particulièrement aux figures 1 et 3, le montage du module 9 sur la volute 1 s'effectue de manière à enficher un connecteur 160 du module 9 à travers une ouverture 8 d'un élément 2 de volute (par exemple demi-volute ou support moteur 2) dans un connecteur correspondant du moteur M, et dans cette position montée, au moins une paroi 105 (en particulier figures 2a, 2c) d'un élément inférieur de boîtier 100 vient se loger dans une ouverture 7 de l'élément 2 de volute, cette ouverture 7 débouchant dans un canal de sortie 4 de la volute qui s'étend autour d'une turbine ou pulseur à partir d'une région de départ 41 et en s'évasant progressivement vers une sortie 42. En particulier, cette ouverture 7 peut être également utilisée pour réaliser le refroidissement du moteur en aval du refroidissement du module.

L'alimentation en air de cette ouverture 7 se réalise naturellement sous l'effet de la pression dynamique de l'air qui circule dans le canal de sortie 4. On remarquera, ainsi qu'il apparaît aux figures 1 et 3, que le module 9 est constitué d'un boîtier supérieur 90 et d'un boîtier inférieur 100 reliés par des fixations 93, 113, et disposés de manière à venir en appui sur une face 5 de la volute qui forme un trottoir qui borde le canal de sortie 4 entourant le moteur M. Plus particulièrement, le module 9 est logé au voisinage du début 41 du canal de sortie 4 et à peu près dans la première moitié de l'espace angulaire occupé par ce canal. Cette disposition est favorable dans la mesure où d'une part, il n'y a pas d'encombrement axial supplémentaire qui est nécessité par l'implantation du module 9, et d'autre part, parce que cet espace situé autour du moteur M au voisinage du début 41 du canal 4 est généralement inutilisé et peut donc être occupé sans inconvénient.

Comme le montrent plus particulièrement les figures 2a à 2c, la partie inférieure 100 du boîtier 9 du module présente un fond 101 qui vient porter sur la face 5 formant trottoir de l'élément 2 la volute 1, une face interne 103 concave à une extrémité de laquelle est situé un logement 102 pour le connecteur, et à l'autre extrémité de laquelle est disposé l'élément de refroidissement 104 présentant au moins une paroi de refroidissement 105 et éventuellement des ailettes supplémentaires 106. Dans l'exemple représenté, cette paroi 105 est située à l'extrémité du module 9 et vient longer la face 71 de l'ouverture 7 en position de montage du module lorsque le connecteur 160 a été encliqueté complètement dans le connecteur complémentaire du moteur M.

Le demi-boîtier 100 présente également des entretoises 120 permettant le montage d'un circuit imprimé 170 représenté schématiquement à la figure 2d. Ce circuit 170 présente des contacts électriques d'alimentation 175, et divers composants électriques selfiques, par exemple une self d'entrée L₀, capacitifs (C5, C7, C9, etc...), ainsi que des transistors (T1, T2, T3) et/ou un thyristor THR. De manière à éviter une propagation thermique trop rapide d'un élément à l'autre, le boîtier comporte avantageusement au moins deux compartiments 111 et 112 séparés par une (ou plusieurs) cloisons 110, ce qui permet notamment, comme représenté, d'isoler la self d'entrée L₀ disposée à cet effet dans le compartiment 111 qui jouxte l'échangeur 104 et qui est séparé par la cloison 110 du compartiment 112 qui porte les autres composants du circuit. En outre, la mise en oeuvre d'une cloison 110 en métal permet d'assurer une certaine immunité électromagnétique vis-à-vis du phénomène des interférences électromagnétiques entre les deux compartiments.

Lorsque le module 9 est monté sur la volute 1, la face inférieure 180 du demi-boîtier 100 est en contact avec la paroi 5 formant trottoir, le connecteur 160 est encliqueté dans le connecteur correspondant du moteur et là où les parois 105 et/ou 106 sont positionnées dans l'ouverture 7 de manière à être traversées par le flux d'air du canal 4. Des pattes d'extrémités 140, 150 permettent de fixer en place le boîtier 100 une fois qu'il a été mis en place.

La géométrie retenue d'un boîtier en forme de secteur circulaire permet un montage simple en trois temps, à savoir, une phase d'approche sensiblement parallèle à l'axe X pour positionner la paroi 105 au-dessus de l'ouverture 7 et le connecteur 160 à proximité du connecteur complémentaire, une position de plongée dans le sens de l'axe OZ pour faire descendre la paroi 105 dans le logement 7 et disposer le connecteur 160 en position d'accostage du connecteur complémentaire, et enfin une phase de connexion parallèlement à l'axe X pour enficher le connecteur 160 dans le connecteur complémentaire et disposer la paroi 105 au voisinage de la paroi 71 ou en butée sur celle-ci.

Pour éviter la transmission de vibrations à la carte, le connecteur 160 du module est avantageusement découplé de la carte, par exemple par un joint intermédiaire en élastomère souple.

L'étanchéité peut être facilement réalisée en faisant coopérer les ouvertures du module avec les ouvertures du support par des moyens d'étanchéité classiques tels que lèvres, joints élastomères, etc...

La mise en oeuvre d'une connexion directe entre le module et le moteur permet, dans le cas d'un module du type PWM pour lequel la puissance à évacuer est de l'ordre de 20 W. (voir figure 2e) de s'affranchir au niveau du moteur M d'un condensateur C₀ branché en parallèle entre les extrémités des selfs L et L', et au niveau du module, d'une self série L1. Ces deux éléments ainsi omis sont représentés en pointillés à la figure 2e.

En tant que de besoin, le refroidissement pourrait être amélioré en faisant circuler l'air à travers le module lui-même de manière à ce qu'il vienne baigner directement les composants du circuit imprimé. A cet effet, le module pourrait être muni d'un canal d'air prélevant l'air du flux d'air dans l'ouverture 7 et en la rejetant dans le canal 4 en amont dans le sens de la circulation du flux d'air. Cette circulation à contre-courant est en effet possible, car la pression dynamique augmente au fur et à mesure que l'on se dirige depuis l'entrée 41 du canal 4 vers sa sortie 42.

Selon la variante représentée aux figure 4a et 4b, le module 9 est surélevé par des parois 193, 194, 195, 196 pourvues à leur partie supérieure de moyens d'étanchéité 197 de manière à dégager un canal 190 qui communique avec le canal de sortie 4 par des ouvertures 191 et 192 ménagées par exemple dans la paroi 5 de la volute (par exemple demi-volute ou support moteur 2), et qui permettent le passage d'un flux d'air qui vient longer la paroi inférieure 180 du module 9, éventuellement munie d'ailettes non représentées, de manière à assurer le refroidissement du module. Le canal 190 prélève ainsi l'air du flux d'air du canal 4 par au moins une ouverture et la rejette dans le canal 4 par au moins une ouverture.

## Revendications

1. Installation de chauffage et/ou de climatisation comprenant un groupe moto-ventilateur comportant un moteur (M), un module de variation de vitesse (9) du moteur, une turbine entraînée par le moteur (M), et une volute (1) à l'intérieur de laquelle est logée le moteur (M) et définissant un canal de sortie (4) d'un flux d'air à la périphérie de la turbine, **caractérisée en ce que** le module de variation de vitesse (9) est monté à la périphérie du moteur (M) et présente un connecteur électrique (160) enfiché dans un connecteur complémentaire du moteur (M), ainsi qu'au moins une paroi (105, 106, 180) en matériau thermiquement conducteur, qui est en communication avec le canal de sortie (4) de la volute (1) afin de refroidir le module (9).

2. Installation selon la revendication 1, **caractérisée en ce qu'**au moins une dite paroi (105, 106) est disposée dans une ouverture (7) débouchant dans le canal de sortie (4) de la volute (1).

3. Installation selon la revendication 2, **caractérisée en ce qu'**au moins une dite paroi (105, 106) longe une paroi (71) de ladite ouverture (7) ménagée dans la volute (1) et débouchant dans le canal de sortie (4).

4. Installation selon une des revendications 2 ou 3, **caractérisée en ce que** ladite ouverture (7) fait partie d'un canal de refroidissement du moteur (M).

5. Installation selon une des revendications précédentes, **caractérisée en ce qu'**elle présente plusieurs dites parois, formant des ailettes de refroidissement.

6. Installation selon une des revendications précédentes, **caractérisée en ce que** le module (9) présente une face (180) qui vient en appui sur une face (5) de la volute (1) qui forme un côté du canal de sortie (4).

7. Installation selon une des revendications précédentes, **caractérisée en ce que** le module (9) est en forme de secteur circulaire.

8. Installation selon une des revendications précédentes, **caractérisée en ce que** les composants du module sont disposés dans un boîtier (90, 100) présentant au moins une partie (100) métallique ou en plastique chargé.

9. Installation selon la revendication 8, **caractérisée en ce que** le boîtier (90, 100) présente au moins deux compartiments (111, 112) séparés par au moins une cloison (110) permettant une séparation thermique et/ou une isolation vis-à-vis des perturbations électromagnétiques.

10. Installation selon la revendication 9, **caractérisée en ce qu'**un compartiment (111) comporte au moins une self d'entrée (L₀) du module (9).

11. Installation selon une des revendications précédentes, **caractérisée en ce qu'**elle présente un canal de circulation d'air à l'intérieur du module ayant une entrée qui communique avec une première région du canal de sortie (4) de la volute (1) et une sortie qui communique avec une deuxième région du canal de sortie (4) de la volute (1), située en amont de la première région par rapport au sens de circulation du flux d'air dans le canal de sortie (4).

12. Installation selon l'une des revendications précédentes, **caractérisée en ce qu'**elle présente un canal de circulation d'air (190) qui longe une face inférieure (180) du moule (9) et qui communique avec le canal de sortie (4) par une pluralité d'ouvertures (191, 192) afin de prélever dans le canal de sortie (4) un flux d'air qui vient longer ladite face inférieure (180) du module (9) afin de refroidir celui-ci.

13. Installation selon l'une des revendications précédentes, **caractérisée en ce que** le module est du type à modulation de largeur d'impulsion (PWM).

## Claims

1. Heating and/or air conditioning installation comprising engine blowers comprising an engine (M), an engine speed regulation module (9), a turbine driven by the engine (M), and a blower housing (1) inside which the engine (M) is housed and defining an air flow outlet duct (4) at the periphery of the turbine, **characterised in that** the speed regulation module (9) is mounted on the periphery of the engine (M) and has an electric plug (160) plugged into an additional plug of the engine (M), and at least one wall (105, 106, 180) made of thermally conductive material, which communicates with the outlet duct (4) of the blower housing (1) in order to cool the module (9).

2. Installation according to claim 1, **characterised in that** at least one said wall (105, 106) is arranged in an opening (7) running into the outlet duct (4) of the blower housing (1).

3. Installation according to claim 2, **characterised in that** at least one said wall (105, 106) runs along a wall (71) of said opening (7) provided in the blower housing (1) and running into the outlet duct (4).

4. Installation according to any of claims 2 or 3, **characterised in that** said opening (7) is part of a cooling duct of the engine (M).

5. Installation according to any of the above claims, **characterised in that** it has several said walls, forming cooling fins.

6. Installation according to any of the above claims, **characterised in that** the module (9) has a side (180) which rests against a side (5) of the blower housing (1) which forms a side of the outlet duct (4).

7. Installation according to any of the above claims, **characterised in that** the module (9) is in the shape of a circular sector.

8. Installation according to any of the above claims, **characterised in that** the components of the module are arranged in a covering (90, 100) having at least one metal or filled plastic part (100).

9. Installation according to claim 8, **characterised in that** the covering (90, 100) has at least two compartments (111, 112) separated by at least one separation (110) enabling a thermal separation and/or insulation with respect to electromagnetic interference.

10. Installation according to claim 9, **characterised in that** a compartment (111) comprises at least one inlet self-induction coil (L₀) of the module (9).

11. Installation according to any of the above claims, **characterised in that** it has an air flow duct inside the module having an inlet communicating with a first region of the outlet duct (4) of the blower housing (1) and an outlet which communicates with a second region of the outlet duct (4) of the blower housing (1), located upstream from the first region with respect to the direction of the air flow in the outlet duct (4).

12. Installation according to any of the above claims, **characterised in that** it has an air flow duct (190) which runs along a lower side (180) of the module (9) and which communicates with the outlet duct (4) via a plurality of openings (191, 192) in order to remove in the outlet duct (4) an air flow which runs along said lower side (180) of the module (9) in order to cool same.

13. Installation according to any of the above claims, **characterised in that** the module is of the pulse width modulation (PWM) type.

## Patentansprüche

1. Heiz- und/oder Klimaeinrichtung, die einen Gebläsemotor umfasst, der einen Motor (M), ein Geschwindigkeitsschwankungsmodul (9) des Motors, ein vom Motor (M) angetriebenes Lüfterrad und ein Abdeckungsgehäuse (1) umfasst, in dessen Inneren der Motor (M) untergebracht ist und das einen Austrittskanal (4) eines Luftstroms in der Peripherie des Lüfterrads definiert, **dadurch gekennzeichnet, dass** das Geschwindigkeitsschwankungsmodul (9) in der Peripherie des Motors (M) angeordnet ist und einen elektrischen Stecker (160), der in einen komplementären Stecker des Motors (M) eingesteckt ist, sowie mindestens eine Wand (105, 106, 180) aus wärmeleitendem Material aufweist, die mit dem Austrittskanal (4) des Abdeckungsgehäuses (1) in Verbindung steht, um das Modul (9) abzukühlen.

2. Einrichtung nach Anspruch 1, **dadurch gekennzeichnet, dass** mindestens eine besagte Wand (105, 106) in einer Öffnung (7) angeordnet ist, die in den Austrittskanal (4) des Abdeckungsgehäuses (1) mündet.

3. Einrichtung nach Anspruch 2, **dadurch gekennzeichnet, dass** mindestens eine besagte Wand (105, 106) an einer Wand (71) der besagten Öffnung (7) entlangführt, die im Abdeckungsgehäuse (1) eingerichtet ist und in den Austrittskanal (4) mündet.

4. Einrichtung nach einen der Ansprüche 2 oder 3, **dadurch gekennzeichnet, dass** die besagte Öffnung (7) Teil eines Kühlkanals des Motors (M) ist.

5. Einrichtung nach einem der vorhergehenden Ansprüche, **dadurch gekennzeichnet, dass** sie mehrere besagte Wände aufweist, die Kühlflügel bilden.

6. Einrichtung nach einem der vorhergehenden Ansprüche, **dadurch gekennzeichnet, dass** das Modul (9) eine Außenseite (180) aufweist, die sich auf eine Außenseite (5) des Schneckengehäuses (1) stützt, die eine Seite des Austrittskanals (4) bildet.

7. Einrichtung nach einem der vorhergehenden Ansprüche, **dadurch gekennzeichnet, dass** das Modul (9) die Form eines Kreissektors hat.

8. Einrichtung nach einem der vorhergehenden Ansprüche, **dadurch gekennzeichnet, dass** die Komponenten des Moduls in einem Gehäuse (90, 100) angeordnet sind, das mindestens einen Teil (100) aus Metall oder verstärktem Plastik aufweist.

9. Einrichtung nach Anspruch 8, **dadurch gekennzeichnet, dass** das Gehäuse (90, 100) mindestens zwei Abteile (111, 112) aufweist, die durch mindestens eine Trennwand (110) getrennt werden, wodurch eine thermische Trennung und/oder eine Isolation gegen elektromagnetische Störungen ermöglicht werden.

10. Einrichtung nach Anspruch 9, **dadurch gekennzeichnet, dass** ein Abteil (111) mindestens eine Eintrittsdrossel (L₀) des Moduls (9) umfasst.

11. Einrichtung nach einem der vorhergehenden Ansprüche, **dadurch gekennzeichnet, dass** sie einen Luftumlaufkanal im Inneren des Moduls aufweist, der einen Eintritt besitzt, der mit einem ersten Bereich des Austrittskanals (4) des Abdeckungsgehäuses (1) verbunden ist, und einen Austritt, der mit einem zweiten Bereich des Austrittskanals (4) des Abdeckungsgehäuses (1) verbunden ist, und der dem ersten Bereich bezogen auf die Umlaufrichtung des Luftstroms im Austrittskanal (4) vorgeschaltet ist.

12. Einrichtung nach einem der vorhergehenden Ansprüche, **dadurch gekennzeichnet, dass** sie einen Luftumlaufkanal (190) aufweist, der an einer Innenseite (180) des Moduls (9) entlangführt, und der mit dem Austrittskanal (4) über mehrere Öffnungen (191, 192) verbunden ist, um im Austrittskanal (4) einen Luftstrom zu entnehmen, der an der besagten Innenseite (180) des Moduls (9) entlangzieht, um dieses abzukühlen.

13. Einrichtung nach einem der vorhergehenden Ansprüche, **dadurch gekennzeichnet, dass** das Modul vom Typ zur Pulsweitenmodulation (PWM) ist.
